# EUROPEAN PATENT SPECIFICATION

(11) **EP 0 893 185 B1**
(45) Date of publication and mention of the grant of the patent: **20.08.2003**
(21) Application number: 98304288.8
(22) Date of filing: 29.05.1998
(51) Int. Cl.: B23B 51/00, B23B 51/02

(54) **Twist drill**
Wendelbohrer
Foret hélicoidal

(30) Priority: 29.05.1997 US 48016 P
(43) Date of publication of application: 27.01.1999
(73) Proprietor: Black & Decker Inc., Newark Delaware 19711 (US)
(72) Inventor: Thomas, Rickey J, Lineboro, Maryland 21088 (US)
(74) Representative: Dlugosz, Anthony Charles

(56) References cited:
- EP-A- 0 582 475
- US-A- 4 556 347
- US-A- 4 898 503
- US-A- 4 968 193

## Description

The invention relates to twist drill bits having flutes that extend from a tip of the drill bit to a termination point on the shank of the bit. The drill bit flutes define a web thickness which increases along the length of the flute from the tip to the termination point. Conventional drill bits employ a web taper rate that is recommended by various Standards in the industry.

Conventional wisdom holds that it is advisable to use a relatively shallow web taper rate in twist drills so that the flute depth is as great as practicable along the length of the flute. This will provide the maximum amount of volume to convey chips, swarf or sawdust back from the tip up the bit and out of the hole thereby being drill. This convention is embodied in two Standards, namely The American Society of Mechanical Engineers (ASME B94.11M-1993) and National Aerospace Standard of the Aerospace Industries Association of America, Inc., (NAS 907) (hereinafter collectively referred to as "Standards"). The Assignee of the present invention has been selling conventional drill bits according to the preamble of claim 1, which track the Standards and have conventional web thickness taper rates between 0.024 to 0.030 centimetres per centimetre (or inches per inch). Also, it has been selling a self-centering drill bit with pilot tip under the BULLET® trademark and having a web taper rate of about 0.027 centimetres per centimetre (inches per inch) of flute length. This self-centering drill bit was designed with the end user who uses a portable drill in mind, particularly one who desires a bit which is optimised to drill in both metal and wood. The first versions of these bits are disclosed in U.S. Patent Nos. 4,968,193, issued November 6, 1990, to Chaconas et al., and 5,288,183, issued February 22, 1994, to Chaconas et al., each of which is assigned to the same Assignee of the present invention.

It has been determined that the operator who uses the bit in a hand-held power drill would like increased toughness or resistance to breaking (typically in the flute portion of the drill bit), and for the BULLET® bit, would like more robustness at the pilot portion and a reduced tendency in laminated materials to produce a disk as the bit using a conventional BULLET® fishtail angle produces.

The increased robustness is primarily desired because the user puts considerable stresses on the drill bit while drilling metal, not nearly as steady an operation as when using a drill press. However, in connection with the BULLET® drill bit, which was optimised to drill well both in metal and in wood, there remains the continued need to be able to drill holes through wood with a minimum of "woodpeckering", that is the need by the operator to continually remove and reinsert the drill bit while drilling to clear the flutes of sawdust. Finally, there is also a need to enhance the BULLET® drill bit's longevity if it should be subjected to an overspeed condition while drilling, in particular, metal.

It is therefore an object of the present invention to provide a drill bit which has improved resistance to breaking and alleviate the aforementioned problem.

In accordance with the present invention there is a provided a twist drill bit comprising:
a shank portion, a fluted portion and a tip portion adjacent the fluted portion;
the fluted portion defining at least one flute extending from the tip portion and terminating at the shank portion,
the at least one flute having a predetermined flute length;
the fluted portion further defining a web;
the web adjacent the tip portion having a predetermined web thickness; and characterised in that
the web thickness increasing from the tip portion to the shank portion at a uniform taper rate in the range of about 0.050 inches to about 0.071 centimetres per centimetre (or inches per inch) of flute length.

It has been discovered that a radically-increased web taper rate will yield a much more robust drill bit. In addition, it has been discovered that a particular range of increased web taper rates will provide sufficiently enhanced robustness or strength when drilling in metal while simultaneously providing a bit which minimises the amount of woodpeckering required when drilling wood. Accordingly, it is an object of the present invention to manufacture a twist drill bit having a web thickness taper rate over the length of the flute which is about twice as great as the web taper rate of conventional drill bits, thereby providing significantly increased resistance to breakage while drilling in metal, yet, for drill bits having nominal diameters of 0.0635 cm (0.0250 inches) or greater, enabling the user to drill holes in 3.81 cm (inch and one-half) thick wood in one pass.

It has been discovered that bits employing the present invention experience significantly enhanced toughness and resistance to breakage, particularly when used by an operator of a portable drill.

It is a particular object of the preferred embodiments of the invention to provide a twist drill bit in which the web thickness increases from the tip to the shank portion at a uniform taper rate along the length of the flute in the range from about 0.050 inch to about 0.071 centimetre per centimetre (inches per inch) of flute length. It is yet another particular object of the preferred embodiments of the invention to provide a bit marking zone on the shank portion of the drill bit which is outside of the area of the shank typically gripped by the jaws of a chuck in which the drill bit is inserted.

A feature by which the above objects may be attained is by forming the flutes with the web taper rate of the present invention along a flute length which is less than the flute length specified for a predetermined bit nominal diameter by the ASME B94.11-M-1993 Standard, and specifically by reducing the flute length by about 0.762 cm to about 1.778 cm (0.3 inch to about 0.7 inch). Optimally, the flute length is reduced by about 1.27 cm (one-half inch), for all nominal diameters of the drill bits. A preferred feature is to form such indicia as the nominal size of the bit in the marking zone, so that in the engagement by the chuck of the bit shank does not erase the indicia.

Further according to the present invention there is provided a process for making a twist drill bit having a tip, a shank and two flutes defining a predetermined web thickness at the tip, comprising:
orienting a grinding wheel having a predetermined diameter at a predetermined angle relative to the axis of a piece of drill bit stock for generally transverse movement towards and away from said drill bit stock;
aligning said grinding wheel with the tip of said drill bit stock to remove a sufficient amount of material to create a predetermined web thickness at said tip when said two flutes have been formed; and
causing relative axial movement between said grinding wheel and said drill bit stock while rotating said drill bit stock about its axis to grind a flute having a predetermined flute length in said bit, such that said flute has a uniform web-thickness taper rate lying in the range of from about 0.050 to about 0.071 centimetres per centimetre (inches per inch) of flute length over substantially the entire length of said flute.

Another feature by which the above objects can be attained is by causing relative axial movement between a grinding wheel and drill bits stock while rotating the drill bit stock about its axis to grind the flute having the desired flute length with the web thickness taper rate of the present invention and retracting the grinding wheel from the drill bit stock upon reaching a point which is a predetermined distance before the point at which the flute would terminate at the shank if the taper rate were maintained.

It is yet another object of the present invention to enhance the robustness of self-centering drill bits with pilot tip of the type sold under the trademark BULLET®. One feature by which the above object can be attained is by optionally providing the drill bit tip portion with a fishtail angle of less than 180°. Yet another preferred feature is to form a chamfer adjacent the fishtail such that a cutting edge on the chamfer connects a cutting lip on the fishtail with the outer diameter of the drill bit. Still another preferred feature is to provide the pilot portion with a back taper in the axial direction. Still another preferred feature is to provide a back taper which is negative, and at least 1° negative. And yet another feature is to size the width or diameter of the pilot portion to be about one-half the nominal bit diameter.

Other objects, features and advantages of the present invention will become more fully apparent from the following detailed description of the preferred embodiments, the appended claims and the accompanying drawings.

In the accompanying drawings, in which like reference characters in the same or different Figures indicate like part:
Figure 1 is a side elevational schematic view of a conventional drill bit to which a force F has been applied to such an extent that the bit breaks in the flute portion;
Figure 2 is a side elevational schematic view of a twist drill bit according to the present invention in which a much higher force F must be applied to break the drill bit;
Figure 3 is a side elevational schematic view of a twist drill bit according to another embodiment of the present invention to which a force F is applied to cause the bit to break outside the flute portion;
Figure 4 is a schematic detail view of the drill bits of Figures 2 and 3 superimposed upon the drill bit of Figure 1, employing the web taper rates of the present invention;
Figure 5 is similar to Figure 4, but illustrating solely a web taper rate of the present invention, in combination with a pilot tip of the present invention;
Figure 6 is similar to Figure 5, but illustrating the web taper rate of the present invention in a conventional twist drill bit;
Figure 7 is a view similar to the view of Figure 5, illustrating an embodiment of the present invention in which the flute length is the same as the conventional flute length;
Figure 8 is an elevational schematic view of the process for forming the web taper rate of the present invention;
Figure 9 is an elevational detail schematic view of the tip portion of a self-centering drill bit having a pilot tip;
Figure 10 is one embodiment of an improved tip portion according to the present invention;
Figure 11 is another embodiment of the tip portion of the present invention;
Figure 12 is yet another embodiment of the tip portion according to the present invention;
Figure 13 is still another embodiment of the tip portion of the present invention;
Figure 14 is partial enlarged elevational detail view of the bit of Figure 9 rotated to illustrate a secondary lip relief angle ("F2"); and
Figure 15 is an enlarged schematic detail view of the process for forming a portion of the tip portion of Figure 9.

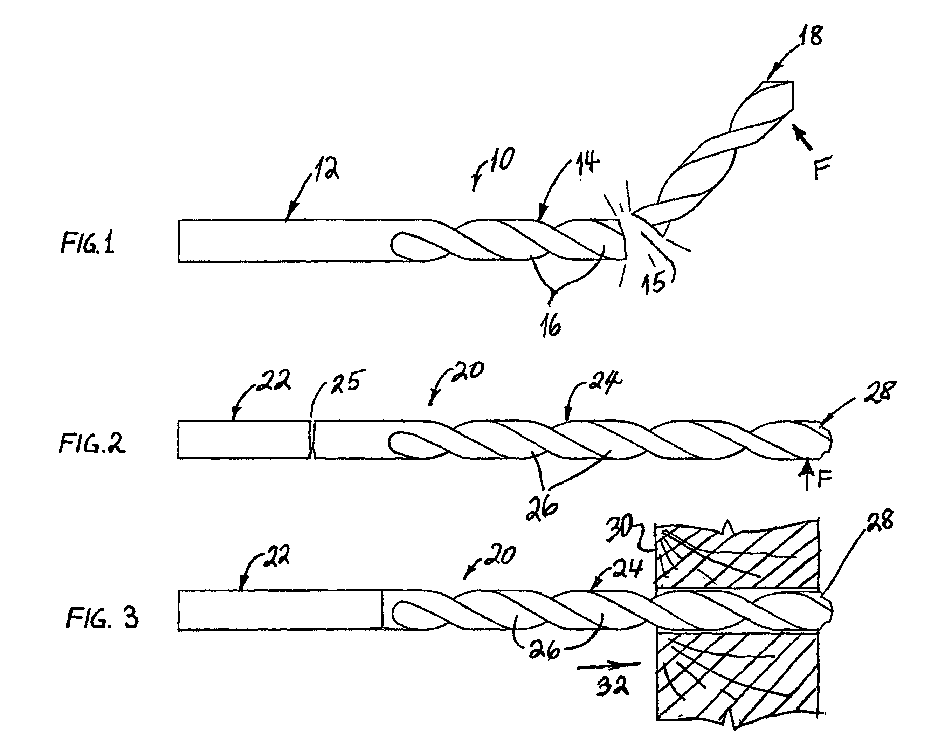

Referring first to Figure 1, a conventional twist drill bit is shown generally as 10, and includes a shank portion 12, a flute portion 14 containing two flutes 16 and a tip portion 18. When drilling in metal, from time to time, particularly when used in a portable power drill, the drill bit encounters greater than normal forces F transverse to the axis of the drill bit, as shown schematically in Figure 1. If the force F is great enough, the drill bit will break or fail as shown at 15. Tests run on a quarter inch (0.635 cm) diameter conventional twist drill bit found that the failure 15 occurred primarily in the fluted portion 14, when the bit was subjected to a peak force at failure in the range from 68.04 to 79.38 kg (150 to 175 lbs).

A twist drill using the taper rate of the present invention is shown generally as 20 in Figure 2, and includes shank portion 22, flute portion 24 having two flutes 26 and a tip portion 28. In tests of a quarter inch (0.635 cm) nominal diameter twist drill bits incorporating the taper rate of the present invention, it took a peak force at failure in the range of 113.4 kg to 136.08 kg (250 to 300 lbs) to break the bit. In most cases the break occurred not in the fluted portion 24, but in the strongest part of the bit, namely the shank portion 22. This result was attained even though no change was made to the industry Standard as far as the hardness of the bit steel is concerned; namely, the first three quarters of the fluted portion in the direction away from the tip portion is at a hardness of full hardness, decreasing to a tougher hardness at that point until the end of the shank.

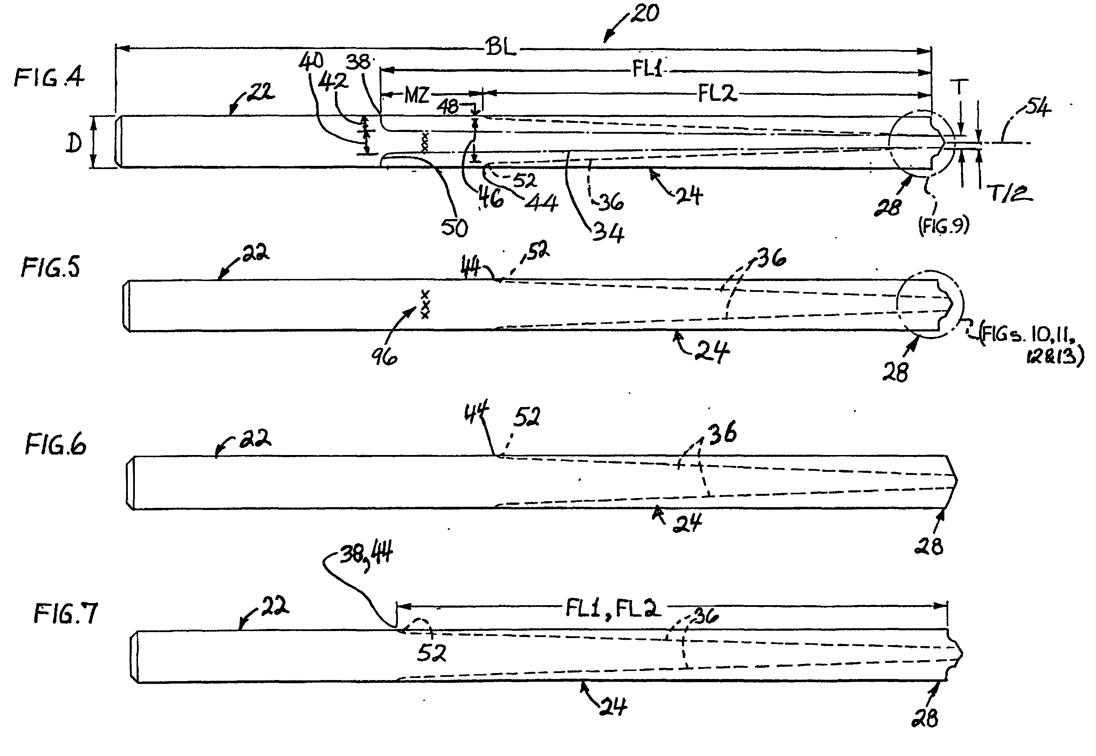

Figure 3 shows an alternate embodiment of a twist drill incorporating the web thickness taper rate of the present invention, and illustrating its ability to perform well in wood while maintaining its much enhanced strength while drilling in metal. It has been found that a twist drill bit made according to the invention shown in Figure 3 and having a nominal bit diameter of 1/4" (0.635 cm) can be used to drill a hole through a 2.54 to 3.81 cm (1-1/2") thick piece of wood without having to withdraw the bit to clear the sawdust from the flutes and then reinserting the bit to finish the hole. The wood is shown at 30 and is a two by four (5.08 cm by 10.16 cm) for example. Thus the present invention as embodied in the twist drill bit shown in Figure 3 reduces the amount of "woodpeckering" that the user must do to drill holes in wood. In the instance of a 1/4" (0.635 cm) bit drilling through a two by four (5.08 by 10.16 cm), the operator can use a metal-drilling drill bit to drill a hole through the board in one pass, as indicated by arrow 32. The web taper rates of the present invention are shown in various embodiments in Figures 4 through 7.

Figure 4 schematically illustrates the web taper (shown in short dashes) of the present invention superimposed upon the web taper (shown as long and short dashes). The profile of the conventional web taper is referred to as 34, and the web profile of the present invention is referred to as 36.

At this point it should be noted that the improvements of the present invention affected are particularly effective when used in the environment of a drill bit designed for both metal-drilling and wood-drilling, by means of a hand-held power drill, where the operator can place more transverse stresses on the drill bit than, for example, the operator of a fixture drill bit such as one driven by a drill press. Accordingly, the most common drill bit used by the person operating a hand-held power drill is the foundation upon which the improvements of the present invention have been made. This is known as the "Jobber's-length drill bit" specifications for which are common in the industry and are set out in such Standards as the ASME B94.11 M-1993 and the NAS 907. These two Standards collectively set forth commonly-accepted ranges of drill bit parameters for various nominal diameters of the drill bits, and further reflect the conventional wisdom in the art of jobber-length drill bit technology. This wisdom holds that the more chips or sawdust a flute can remove from the hole being drill, the better. To that end, conventional wisdom dictates that the web thickness tapers outwardly from the tip towards the shank at a very gradual rate. For example, the NAS 907 Standard specifies that the web taper rate for Types "A", "B" and "J" straight shank, jobber's length drill bits be a uniform taper of 0.017", 0.024" and 0.006" (0.0432 cm, 0.061 cm and 0.0152 cm), respectively, with respective tolerances of plus or minus 0.003" (0.0076 cm) plus or minus 0.003" (0.0076 cm), plus or minus 0.002" (0.0051 cm), respectively. The taper rates of the bits sold by the Assignee of the present invention track the Standards closely. For example, the drill bits sold under the DeWALT® trademark have a taper rate of 0.024" (0.061 cm) for drill bit nominal diameters up to and including 3/16" (0.476 cm) and a web taper rate of 0.030 inches per inch or centimetres per centimetre of flute length for drill bits having nominal diameters greater than 3/16 of an inch (0.476 cm). Self-centering drill bits having pilot tips sold under the BULLET® trademark have a web taper rate of 0.027 inches per inch (or centimetre per centimetre) of flute length. Referring once again to Figure 4, the results of the web taper rate recommended by the Standards and in common use are reflected in a deep flute, exiting the flute portion 24 at a termination point 38 with the outer diameter of the shank portion 22, the shank portion being defined as the portion of the drill bit outside of the portion that contains the flute and which is inserted in the chuck of a power drill. Here the web thickness of the conventional web profile 34 has increased from a thickness T to a thickness designated by 40, leaving a large flute depth 42 for receiving the chips or sawdust. This is in marked contrast to the geometry of the flute defining a web having a taper rate of the present invention. The web taper profile 36 exits the bit at a flute termination point 44. This results in a much thicker web 46 at the flute termination point 44 and yields a very small flute depth 48 at that point. Please note that the grinding wheel leaves a relatively large radius portion 50 at the conventional flute termination point, and a relatively small radius 52 at the flute termination point 44 of the present invention.

A uniform web taper rate of 0.068 inch per inch (or centimetre per centimetre) of flute length was selected and the resulting bit durability and performance far exceeded expectations. The transverse force F applied to a rotating drill bit cantilever-mounted drill bit exceeded 113.4 kg (250 lbs) (for a 1/4" (0.635 cm) nominal diameter drill bit), with very acceptable chip removal characteristics when drilling in metal. Another embodiment of the present invention, the web thickness taper rate was set at 0.054 inches per inch (or centimetres per centimetre) of flute length (plus or minus 0.003 inches (0.0076 cm)) for all sizes of drill bits from 1/8" (0.3175 cm) nominal diameter to 1/2" (1.27 cm) nominal diameter. Not only did the drill bit of this second embodiment maintain a failure at peak force of 113.4 to 136.08 kg (250 to 300 lbs) for a drill bit with a 1/4" (0.635 cm) nominal diameter, but it exhibited anti-woodpeckering characteristics when drilling wood. It was able to drill a hole in 1/2" (1.27 cm) thick wood (such as a 2 X 4) (5.08 x 10.16 cm) in one pass. Thus a drill bit was discovered that was much stronger than conventional drill bits when drilling in metal, yet be versatile enough to reduce the need for woodpeckering when drilling in wood.

The other parameters which are attached to the drill bit shown in Figure 4 (and to the other embodiments shown in the Drawings) are called out as follows: "D" stands for the nominal diameter of the drill bit; "BL" stands for the bit length (note that it does not extend to the tip but instead to the axially forwardmost point of the bit where the flute cuts the outer diameter of the bit; "FL1" stands for the flute length of a flute having a conventional web thickness taper rate and is the flute length referred to in the previously-identified Standards; "FL2" is the flute length of one of the preferred embodiments of the present invention, created by diminishing FL1 by a predetermined amount MZ. As will be described soon, selecting FL2 in this fashion confers two benefits to the drill bit of the present invention.

Still referring to Figure 4, for the most part the parameters just described, and those in the Standards, pertain to a double-flute, straight-shank, jobber's length drill bit. However, it is believed that the concept of the present invention will also have utility in the environment of a drill bit with a single flute. In that case, instead of measuring the taper rate of a web thickness T, the taper rate of the shortest radial distance between the flute and the axis 54 of the drill bit (T/2) would be specified. In any event the preferred web thickness taper rate ranges from about 0.050 to about 0.071 inches per inch (centimetres per centimetre) of flute length, and the flute length FL lies in the range from about 0.762 cm to about 1.778 cm (0.3 inch to about 0.7 inch) less than the flute length specified where a particular fray drill bit having a particular nominal bit diameter, by the ASME Standard.

It has been found that ideally the distance MZ is about 1.27 cm (1/2"); again, this will be discussed at greater length shortly.

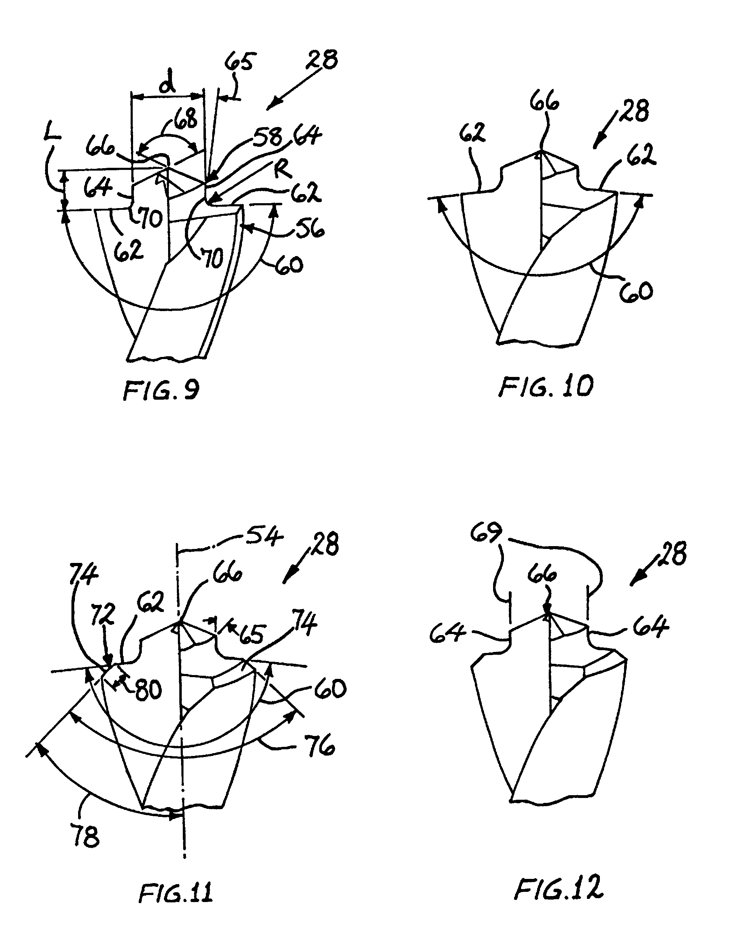

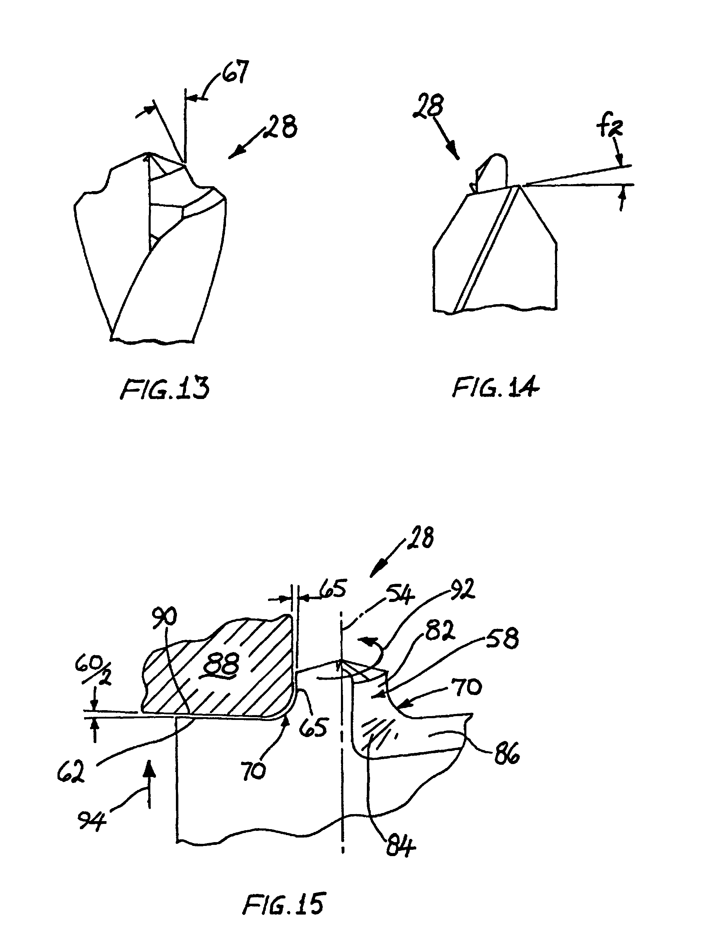

Although the web taper rate of the present invention is anticipated to do well in a drill bit having a conventional chisel point or web-thinned point (such as a split point) as schematically shown in Figure 6, it is particularly useful in the metal/wood-drilling self-centering drill bit with pilot tip, developed by the Assignee of the present invention. These embodiments are shown in Figures 4 and 5, which in turn can be equipped with any of the tip portions 28 shown in Figures 9 through 13. The parameter nomenclature for these embodiments are noted in Figure 9, where the tip portion 28 includes a fishtail portion 56 and a pilot portion 58 extending axially outwardly from the fishtail portion. The fishtail portion includes fishtail cutting lips 62 arranged at a fishtail angle 60°. In this embodiment, the cutting lips extend from the pilot portion to the outer diameter of the drill bit. The pilot portion 58 extends a distance "L" from the fishtail portion 56, and has a diameter "d" smaller than the nominal diameter "D" of the drill bit. The pilot portion defines an angular pilot wall 64 which is both radially and axially relieved as taught in the above-identified Chaconas et al. patents. The pilot portion 58 is formed with pilot cutting lips arranged at a point angle 68 and, in the preferred embodiment, defines a split point 66. The pilot portion is joined to the fishtail portion 56 with a radially-relieved fillet 70 having a radius "R". In the embodiment shown in Figure 9, the geometry of the tip portion 28 is that contained in the bit presently on the market. The fishtail angle 60 is greater than 180°, namely is about 190°, and the orientation of the pilot wall defines an axial back taper 65 of about 5°. At this point the convention used for the balance of this detailed description of the preferred embodiments is that a back taper on the pilot 58 which is directed radially inwardly from the tip end 66 of the bit 20 toward the fishtail portion 56 will be considered a "positive" angle, whereas a back taper which is directed radially outwardly, as identified as 67 in Figure 13 will be considered a "negative" back taper angle. A negligible back taper angle is shown as 69 in the embodiment shown in Figure 12. For the purposes of this description, "negligible" means in the range from less than minus 1° to less than positive 1°.

Again referring to Figure 9, the fishtail cutting lips 62 are merged with the axial wall of the pilot portion 58 by a radially relieved fillet having a radius "R". The generation of this surface is schematically shown in Figure 15 and will be described later.

Other parameters noted in Figure 9 are carried through the balance of Figures 10 through 13 and include the pilot length "L", pilot diameter "d" and a point angle 68. In the drill bit of Figure 9 presently on the market, the point angle 68 is 135° and the fishtail angle 60° is 190°.

Referring now to the embodiment shown in Figure 10, it has been discovered that the fishtail portion 56 will exhibit increased longevity, if the fishtail angle 60 is reduced to lie in the range from about 168° to about 182°, and preferably about 170°. It has also been discovered that the pilot portion will exhibit increased longevity if its diameter "d" is approximately one-half the nominal bit diameter.

Yet another discovery was made that adding a chamfer portion 72, as shown in Figure 11, significantly improves the life of the bit if run at an overspeed condition. The chamfer portion 72 includes at least one chamfer 74, and in the preferred embodiment includes two chamfers. The chamfers 74 are oriented at a chamfer angle 76 which is in the range of 75° to about 140° and is preferably about 90°. In the single-chamfer embodiment, the chamfer angle 78 is about 45°, or one-half the two-chamfer included angle 76. The length of the chamfer 80 is from about 5% to about 15% of the nominal diameter and is preferably about 10% (is preferably about 0.0635 cm (0.025 inches)). Furthermore, in the embodiment shown in Figure 11, the included angle 68 remains at about 135°, but the preferred back taper angle is in the range from 0° to 5.5°, with the preferred angle being 5°.

The embodiment shown in Figure 12 is very similar to that of Figure 11, except the back taper angle 69 is negligible. Similarly the embodiment shown in Figure 13 uses a negative back taper angle which, in this embodiment would be greater than minus 1°.

Referring now to 15, the process for generating the pilot portion 58, the fishtail portion 56 and the radially-relieved fillet 70 is shown. The area of the pilot diameter relief is shown as 82; the fillet relief area is shown at 84, and the area of fishtail cutting lips relief is shown as 86. It will be appreciated that the drill bit shown in Figure 15, a continuous cutting edge is created by the fishtail cutting lips 62, fillet 70 and pilot wall cutting edge 65. In order to enable these edges to cut satisfactory, they all must be provided with relief surfaces as shown in Figure 15. To form such surfaces, a grinding wheel 88 having a grinding wheel face 90 and the bit axis 54 are oriented relative to one another such that the fishtail angle 60 divided by 2 is in the desired range. The pilot back taper angle 65 (positive or negative) is achieved by providing the grinding wheel 88 with a predetermined form, which also defines the shape of the fillet 70. To generate the desired edges and surfaces, the bit is positioned in the desired angular relationship to the grinding wheel 88 and is rotated about its axis 54 in the direction shown by arrow 92 and at the same time is moved into the wheel in the direction shown by arrow 94, thereby achieving the relief for the cutting edge formed by the pilot edge 65 fillet 70 and fishtail cutting lip 62. The process is repeated on the opposite side of the bit to generate both sets of cutting edges and reliefs.

Returning now to the web thickness taper rate of the present invention, it was discovered that a modification to the flute length recommended by the above-identified Standards resulted in benefits both to the accuracy in the flute tolerances as well as creating a special marking zone "MZ" where such indicia 96 as bit size may be formed, and thereby stay clear of the jaws of the drill chuck to which the bit is inserted (see Figure 4). This means that the drill chuck will not eradicate the drill bit sizes from the shank, as often happens in conventional drill bits.

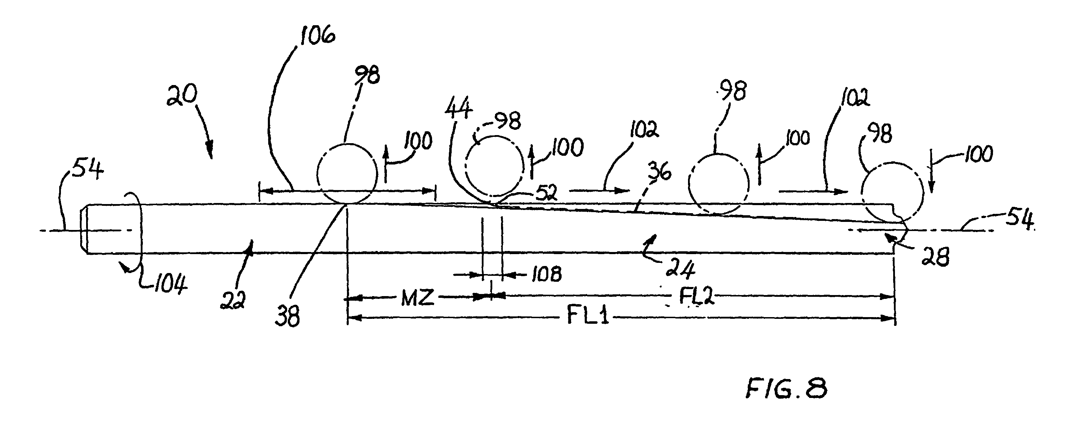

Again referring to Figure 8, a grinding wheel 98 is positioned at a predetermined angle relative to the axis 54 of drill bit 20 and is brought into contact with the bit at the tip portion 28, or starting point of the flute and is moved radially inwardly to that position as shown by arrow 100. The bit stock 20 and the grinding wheel 98 are then caused to move relative to one another along an axial direction 102. In the preferred embodiment, the grinding wheel is held for a movement only in the radially inward and outward directions as shown by arrows 100. The bit stock is moved axially into the grinding wheel. A cam then causes the grinding wheel 98 to move radially outwardly as shown, thereby creating a desired web taper rate. If the grinding wheel 98 at the taper rate of the present invention were to be retracted at the termination point 38 with the bit to create a flute length FL1 corresponding to the flute length recommended by the Standards, the combination of the taper angle would create a variation in tolerance of the flute length FL1 of unacceptable breadth of variability as shown at 106. Inasmuch as the flute length is a very important parameter in the manufacturer of twist drill bits, it is preferable to maintain a variation in flute lengths 108 to a plus or minus 0.318 cm (1/8"), namely 0.635 cm (1/4") in breadth. To reduce the variation in flute length tolerances, it was discovered that if the grinding wheel 98 were retracted radially outwardly at termination point 44, rather than at 38, thereby leaving a small radius 52, the variation in flute lengths 108 could be significantly reduced. This is believed to be a function of the coaction between such a large web thickness taper angle and the variations in grinding wheel surfaces and sizes inherent in the grinding wheels themselves. It was discovered that if the grinding wheel 98 were retracted at a point 52 (which is the flute length FL1) diminished by amount MZ, where MZ is in the range of from about 0.762 to 1.778 cm (0.3 inch to about 0.7 inch), and preferably about 1.27 cm (1/2"), the desired control of flute length tolerances could be attained.

The process is completed when a second flute is formed diametrically opposite the flute just described using the same process. In the preferred embodiments, the process forms a modified parabolic flute.

Although the web thickness taper rate of the present invention is believed to significantly improve the strength of drill bits having conventional point geometry, as schematically shown in Figure 6, it has particular impact upon the durability of drill bits having configurations of the tip portions 28 shown in Figures 9 through 13. The coaction of the taper rate, pilot width, back taper angle, and chamfer of the embodiment shown in Figures 11, will produce a twist drill bit having significantly improved strength in the flute and in the tip portions when drilling in metal, yet enables the user to drill holes in wood with a minimum of woodpeckering, attributes that are particularly desirable in drill bits for use by someone using a power drill, both metal and wood.

The above-described embodiments, of course, are not to be construed as limiting the breath of the present invention. Modifications, and other alternative constructions, will be apparent which are within the scope of the invention as defined in the appended claims.

## Claims

1. A twist drill bit, comprising:
a shank portion, a fluted portion and a tip portion adjacent the fluted portion;
the fluted portion defining at least one flute extending from the tip portion and terminating at the shank portion, the at least one flute having a predetermined flute length;
the fluted portion further defining a web;
the web adjacent the tip portion having a predetermined web thickness; and **characterised in that**
the web thickness increasing from the tip portion to the shank portion at a uniform taper rate in the range of from 0.050 to 0.071 centimetres per centimetre of flute length.

2. , A drill bit as claimed in Claim 1 wherein the fluted portion defines two flutes extending from the tip portion and terminating at the shank portion, these flutes having a predetermined flute length.

3. The drill bit as claimed in either of the preceding claims, wherein the bit has a predetermined nominal diameter, and wherein the flute length lies in the range of from about 0.762 cm to about 1.778 cm less than the flute length specified for said predetermined diameter by the ASME B94.11-M-1993 Standard.

4. A drill bit as claimed in Claim 3, wherein the flute length is approximately 1.27 cm less than the flute length specified for said predetermined diameter by the ASME B94.11-M-1993 Standard .

5. A drill bit as claimed in any one of the preceding claims, further comprising a bit marking zone on the shank portion adjacent the termination of said flutes, the axial length of the bit marking zone being in the range of from about 0.762 cm to about 1.778 cm , and wherein the bit is marked in said bit marking zone with predetermined indicia.

6. A drill bit as claimed in Claim 5, further comprising a bit marking zone on the shank portion adjacent the termination of said flutes, the axial length of the bit marking zone being approximately 1.27 cm , and wherein the bit is marked in said bit marking zone with predetermined indicia.

7. A drill bit as Claimed in any of the preceding claims,
wherein:
the tip portion includes a fishtail portion and a pilot portion extending axially outwardly from the fishtail portion in a direction away from the shank portion;
the fishtail portion having a predetermined diameter and cutting lips arranged in a predetermined fishtail angle; and
the pilot portion having a predetermined diameter smaller than the fishtail portion diameter.

8. A drill bit as claimed in Claim 7, wherein the pilot portion defines an outer surface having a back taper extending toward the fishtail portion in an axial direction at a predetermined back taper angle.

9. A drill bit as claimed in either Claim 7 or Claim 8, wherein said fishtail angle is equal to or less than 180°.

10. A drill bit as claimed in Claim 9, wherein said fishtail angle lies in the range of from about 168° to about 178°.

11. A drill bit as claimed in Claim 10, wherein said fishtail angle is about 170°.

12. A drill bit as claimed in Claim 8, wherein said back taper angle is positive.

13. A drill bit as claimed in any of Claims 8 - 12, wherein said back taper angle lies in the range of from about 1° to about 5.5°.

14. A drill bit as claimed in Claim 13, wherein said back taper angle is about 5°.

15. A drill bit as claimed in Claim 8, wherein said back taper angle is at least 1° negative.

16. A drill bit as claimed in Claim 8, wherein said back taper angle is negligible.

17. A drill bit as claimed in any one of claims 7 to 16, wherein said pilot portion defines pilot cutting lips formed in a web-thinned point.

18. A drill bit as claimed in any one of Claims 7 - 17, wherein said pilot portion defines a split point.

19. A drill bit as claimed in any one of Claims 7 - 18, wherein said fishtail portion further includes a chamfered portion.

20. A drill bit as claimed in Claim 19, wherein the chamfered portion is adjacent said cutting lips and has a chamfer extending at a predetermined chamfer angle with respect to the axis of said drill bit radially outwardly from at least one of said cutting lips and in an axial direction towards said shank portion.

21. A drill bit as claimed in Claim 20, wherein a chamfer connects each cutting lip to the outer diameter of the drill bit.

22. A drill bit as claimed in Claim 21, having two chamfers, said two chamfers defining a chamfer included angle in the range of 75° to 140°.

23. A drill bit as claimed in Claim 22, wherein the chamfer included angle is about 90°.

24. A drill bit as claimed in Claim 20 wherein the chamfer angle is about 45°.

25. A drill bit as claimed in any one of claims 7 to 24, wherein the diameter of the pilot portion lies in the range of about 38 percent to about 52 percent of the nominal drill bit diameter.

26. A drill bit as claimed in any one of Claims 7 - 25, wherein the diameter of the pilot portion is approximately one-half of the nominal drill bit diameter.

27. A drill bit as claimed in any of the preceding claims, wherein the drill bit is a jobber-length, straight-shank drill bit.

28. The drill bit claimed in any of the preceding claims, wherein the flutes are parabolic.

29. A drill bit as claimed in any of the preceding claims, wherein the flute terminates at the shank in a radiused portion.

30. A process for making a twist drill bit having a tip, a shank and two flutes defining a predetermined web thickness at the tip, comprising:
orienting a grinding wheel having a predetermined diameter at a predetermined angle relative to the axis of a piece of drill bit stock for generally transverse movement towards and away from said drill bit stock;
aligning said grinding wheel with the tip of said drill bit stock to remove a sufficient amount of material to create a predetermined web thickness at said tip when said two flutes have been formed; and
causing relative axial movement between said grinding wheel and said drill bit stock while rotating said drill bit stock about its axis to grind a flute having a predetermined flute length in said bit, such that said flute has a uniform web-thickness taper rate lying in the range of from about 0.050 to about 0.071 centimetres per centimetre of flute length over substantially the entire length of said flute.

31. A process as claimed in Claim 30, further comprising retracting said grinding wheel from contact with said drill bit stock upon reaching a point which is a predetermined distance away from the point at which the flute would terminate at the shank if said taper rate were maintained.

32. A process as claimed in Claim 31, wherein said predetermined distance is approximately 1.27 cm.

33. A process as claimed in any of Claims 30-32, wherein said predetermined angle lies in the range of from about 20° to about 40°.

34. A process as claimed in Claim 33, wherein said predetermined angle is about 30°.

## Patentansprüche

1. Wendelbohrer mit
einem Schaftbereich, einem Spannutenbereich und einem dem Spannutenbereich benachbarten Spitzenbereich, wobei
der Spannutenbereich mindestens eine vom Spitzenbereich ausgehende und am Schaftbereich endende Spannut bildet, die eine vorbestimmte Spannutenlänge hat,
der Spannutenbereich ferner einen Steg bildet,
der benachbart zum Spitzenbereich eine vorbestimmte Stegbreite aufweist, **dadurch gekennzeichnet,**
**dass** die Stegbreite vom Spitzenbereich zum Schaftbereich mit einer gleichförmigen Neigungsrate im Bereich von 0,050 cm bis 0,071 cm pro cm Spannutenlänge zunimmt.

2. Bohrer nach Anspruch 1, bei dem der Spannutenbereich zwei Spannuten bildet, die sich vom Spitzenbereich erstrecken und am Schaftbereich enden und die eine vorbestimmte Spannutenlänge haben.

3. Bohrer nach einem der vorhergehenden Ansprüche, bei dem der Bohrer einen vorbestimmten Nenndurchmesser hat und bei dem die Spannutenlänge in einem Bereich liegt, der zwischen etwa 0,762 cm und etwa 1,778 cm kleiner als die für einen derartigen vorbestimmten Durchmesser durch den ASME B94.11-M-1993 Standard bestimmte Spannutenlänge ist.

4. Bohrer nach Anspruch 3, bei dem die Spannutenlänge etwa 1,27 cm kleiner als die Spannutenlänge ist, die durch den ASME B94.11-M-1993 Standard für den vorbestimmten Durchmesser vorgegeben ist.

5. Bohrer nach einem der vorhergehenden Ansprüche, ferner mit einem am Schaftbereich benachbart zum Ende der Spannuten vorgesehenen Bohrermarkierungsbereich, dessen axiale Länge im Bereich von etwa 0,762 cm bis etwa 1,778 cm liegt, und wobei der Bohrer im Bohrermarkierungsbereich mit vorbestimmten Zeichen gekennzeichnet ist.

6. Bohrer nach Anspruch 5, der ferner im Schaftbereich benachbart zum Ende der Spannuten einen Bohrermarkierungsbereich aufweist, dessen axiale Länge etwa 1,27 cm beträgt und wobei der Bohrer im Bohrermarkierungsbereich mit vorbestimmten Zeichen gekennzeichnet ist.

7. Bohrer nach einem der vorhergehenden Ansprüche, bei dem der Spitzenbereich einen Fischschwanzbereich und einen sich vom Fischschwanzbereich in Richtung weg vom Schaftbereich axial nach außen erstreckenden Führbereich aufweist, der Fischschwanzbereich einen vorbestimmten Durchmesser und in einem vorbestimmten Fischschwanzwinkel angeordnete Schneidlippen aufweist und
der Führbereich einen vorbestimmten Durchmesser hat, der kleiner als der Durchmesser des Fischschwanzbereichs ist.

8. Bohrer nach Anspruch 7, bei dem der Fischschwanzbereich eine Außenfläche bildet, die unter einem vorbestimmten Hinterschnittwinkel in axialer Richtung und in Richtung auf den Fischschwanzbereich hinterschnitten ist.

9. Bohrer nach Anspruch 7 oder 8, bei dem der Fischschwanzwinkel gleich oder kleiner 180° ist.

10. Bohrer nach Anspruch 9, bei dem der Fischschwanzwinkel im Bereich von etwa 168° bis etwa 178° liegt.

11. Bohrer nach Anspruch 10, bei dem der Fischschwanzwinkel etwa 170° beträgt.

12. Bohrer nach Anspruch 8, bei dem der Hinterschnittwinkel positiv ist.

13. Bohrer nach einem der Ansprüche 8 bis 12, bei dem der Hinterschnittwinkel im Bereich von etwa 1° bis etwa 5,5° liegt.

14. Bohrer nach Anspruch 13, bei dem der Hinterschnittwinkel etwa 5° beträgt.

15. Bohrer nach Anspruch 8, bei dem der Hinterschnittwinkel negativ ist und mindestens 1° beträgt.

16. Bohrer nach Anspruch 8, bei dem der Hinterschnittwinkel vernachlässigbar ist.

17. Bohrer nach einem der Ansprüche 7 bis 16, bei dem der Führbereich eine in einer stegdünnen Spitze ausgebildete Führschneidlippe hat.

18. Bohrer nach einem der Ansprüche 7 bis 17, bei dem der Führbereich eine geteilte Spitze bildet.

19. Bohrer nach einem der Ansprüche 7 bis 18, bei dem der Fischschwanzbereich ferner einen angefasten Bereich hat.

20. Bohrer nach Anspruch 19, bei dem der angefaste Bereich sich benachbart zu den Schneidlippen befindet und eine Fase hat, die sich unter einem vorbestimmten Anfaswinkel bezüglich der Achse des Bohrers von zumindest einer der Schneidlippen und in axialer Richtung auf den Schaftbereich radial nach außen erstreckt.

21. Bohrer nach Anspruch 20, bei dem eine Fase jede Schneidlippe mit dem äußeren Durchmesser des Bohrers verbindet.

22. Bohrer nach Anspruch 21 mit zwei Fasen, die einen von der Anfasung eingeschlossenen Winkel im Bereich von 75° bis 140° Anfasung bilden.

23. Bohrer nach Anspruch 22, bei dem der von der Anfasung eingeschlossene Winkel etwa 90° beträgt.

24. Bohrer nach Anspruch 20, bei dem der Anfaswinkel etwa 45° beträgt.

25. Bohrer nach einem der Ansprüche 7 bis 24, bei dem der Durchmesser des Führbereichs im Bereich von etwa 38 % bis etwa 52 % des Nenndurchmessers des Bohrers liegt.

26. Bohrer nach einem der Ansprüche 7 bis 25, bei dem der Durchmesser des Führbereichs etwa halb so groß wie der Nenndurchmesser des Bohrers ist.

27. Bohrer nach einem der vorhergehenden Ansprüche, bei dem dieser ein'kurzer Bohrer mit Zylinderschaft ist.

28. Bohrer nach einem der vorhergehenden Ansprüche, bei dem die Spannuten parabolisch geformt sind.

29. Bohrer nach einem der vorhergehenden Ansprüche, bei dem die Spannut am Schaft in einem gerundeten Übergang endet.

30. Verfahren zur Herstellung eines Wendelbohrers mit einer Spitze, einem Schaft und zwei Spannuten, die an der Spitze eine vorbestimmte Stegbreite festlegen, umfassend:
Ausrichten einer einen vorbestimmten Durchmesser aufweisenden Schleifscheibe unter einem vorbestimmten Winkel zur Achse eines Abschnitts eines Bohrerrohlings für eine im Wesentlichen quer erfolgende Bewegung auf den Bohrerrohling zu und von ihm weg,
Ausrichten der Schleifscheibe bezüglich der Spitze des Bohrerrohlings, um zur Erzeugung einer nach dem Ausbilden der beiden Spannuten vorhandenen, vorbestimmten Stegbreite an der Spitze eine ausreichende Materialmenge zu entfernen, und
Bewirken einer relativen, axialen Bewegung zwischen Schleifscheibe und Bohrerrohling, während der Bohrerrohling um seine Achse dreht, um im Bohrer eine Spannut mit vorbestimmter Spannutenlänge zu schleifen, so dass die Spannut eine gleichförmige Stegbreitenverjüngungsrate hat, die über im Wesentlichen die gesamte Länge der Spannut im Bereich zwischen etwa 0,050 cm und etwa 0,071 cm pro cm Spannutenlänge liegt.

31. Verfahren nach Anspruch 30, ferner umfassend das Zurückziehen der Schleifscheibe aus dem Berührungseingriff mit dem Bohrerrohling, wenn eine Stelle erreicht ist, die sich in einem vorbestimmten Abstand von der Spitze befindet, an der die Spannut am Schaft enden würde, wenn die Neigungsrate beibehalten würde.

32. Verfahren nach Anspruch 31, bei dem der vorbestimmte Abstand etwa 1,27 cm beträgt.

33. Verfahren nach einem der Ansprüche 30 bis 32, bei dem der vorbestimmte Winkel in einem Bereich zwischen etwa 20° und etwa 40° liegt.

34. Verfahren nach Anspruch 33, bei dem der vorbestimmte Winkel etwa 30° beträgt.

## Revendications

1. Foret hélicoïdal, comprenant :
- une partie de tige, une partie filetée et une partie de pointe adjacente à la partie filetée ;
- la partie filetée définissant au moins un filet s'étendant depuis la partie de pointe et se terminant à la partie de tige, l'au moins un filet ayant une longueur prédéterminée de filet ;
- la partie filetée définissant, en outre, une âme ;
- l'âme, au voisinage de la partie de pointe, ayant une épaisseur d'âme prédéterminée ;
- **caractérisé en ce que** l'épaisseur de l'âme augmente depuis la partie de pointe jusqu'à la partie de tige, suivant un angle de conicité uniforme, dans la gamme de 0,050 à 0,071 cm par cm de longueur de filet.

2. Foret selon la revendication 1, dans lequel la partie filetée définit deux filets s'étendant depuis la partie de pointe et se terminant à la partie de tige, ces filets ayant une longueur prédéterminée de filet.

3. Foret selon l'une ou l'autre des revendications précédentes, dans lequel le foret a un diamètre nominal prédéterminé et dans lequel la longueur de filet est comprise dans la gamme d'environ 0,762 cm à environ 1,778 cm de moins que la longueur de filet spécifiée pour ledit diamètre prédéterminée par la norme ASME B94.11-M-1993.

4. Foret selon la revendication 3, dans lequel la longueur de filet fait approximativement 1,27 cm de moins que la longueur de filet spécifiée pour ledit diamètre prédéterminé par la norme ASME B94.11-M-1993.

5. Foret selon une quelconque des revendications précédentes, comprenant, en outre, une zone de repérage de foret sur la partie de tige, adjacente à la terminaison desdits filets, la longueur axiale de la zone de repérage de foret étant dans la gamme d'environ 0,762 cm à environ 1,778 cm, le foret étant repéré dans ladite zone de repérage de foret par des repères prédéterminés.

6. Foret selon la revendication 5, comprenant, en outre, une zone de repérage de foret sur la partie de tige, adjacente à la terminaison desdits filets, la longueur axiale de la zone de repérage de foret faisant approximativement 1,27 cm, le foret étant repéré dans ladite zone de repérage de foret par des repères prédéterminés.

7. Foret selon une quelconque des revendications précédentes, dans lequel :
- la partie de pointe comporte une partie en V et une partie de guidage s'étendant axialement vers l'extérieur depuis la partie en V, dans la direction opposée à la partie de tige ;
- la partie en V ayant un diamètre prédéterminé et des lèvres de coupe disposées suivant un angle en V prédéterminé ; et
- la partie de guidage ayant un diamètre prédéterminé inférieur au diamètre de la partie en V.

8. Foret selon la revendication 7, dans lequel la partie de guidage définit une surface extérieure ayant une conicité arrière s'étendant vers la partie en V dans une direction axiale à un angle de conicité arrière prédéterminé.

9. Foret selon l'une ou l'autre de la revendication 7 ou de la revendication 8, dans lequel ledit angle en V est inférieur ou égal à 180 °.

10. Foret selon la revendication 9, dans lequel ledit angle en V est compris dans la gamme d'environ 168 ° à environ 178 °.

11. Foret selon la revendication 10, dans lequel ledit angle en V est d'environ 170 °.

12. Foret selon la revendication 8, dans lequel ledit angle de conicité arrière est positif.

13. Foret selon une quelconque des revendications 8 à 12, dans lequel ledit angle de conicité arrière est compris dans la gamme d'environ 1 ° à environ 5,5 °.

14. Foret selon la revendication 13, dans lequel ledit angle de conicité arrière est d'environ 5 °.

15. Foret selon la revendication 8, dans lequel ledit angle de conicité arrière est d'au moins 1 ° négatif.

16. Foret selon la revendication 8, dans lequel ledit angle de conicité arrière est négligeable.

17. Foret selon une quelconque des revendications 7 à 16, dans lequel ladite partie de guidage définit des lèvres de coupe de guidage ménagées en un point d'amincissement de l'âme.

18. Foret selon une quelconque des revendications 7 à 17, dans lequel ladite partie de guidage définit un point de séparation.

19. Foret selon une quelconque des revendications 7 à 18, dans lequel ladite partie en V comporte, en outre, une partie chanfreinée.

20. Foret selon la revendication 19, dans lequel la partie chanfreinée est adjacente auxdites lèvres de coupe et a un chanfrein s'étendant suivant un angle de chanfrein prédéterminé par rapport à l'axe dudit foret radialement vers l'extérieur depuis au moins une desdites lèvres de coupe et dans une direction axiale vers ladite partie de tige.

21. Foret selon la revendication 20, dans lequel un chanfrein relie chaque lèvre de coupe au diamètre extérieur du foret.

22. Foret selon la revendication 21, ayant deux chanfreins, lesdits deux chanfreins définissant un angle inclus de chanfrein dans la gamme de 75 à 140 °.

23. Foret selon la revendication 22, dans lequel l'angle inclus de chanfrein est d'environ 90 °.

24. Foret selon la revendication 20, dans lequel l'angle de chanfrein fait environ 45 °.

25. Foret selon une quelconque des revendications 7 à 24, dans lequel le diamètre de la partie de guidage est compris dans la gamme d'environ 38 % à environ 52 % du diamètre nominal du foret.

26. Foret selon une quelconque des revendications 7 à 25, dans lequel le diamètre de la partie de guidage fait approximativement la moitié du diamètre nominal du foret.

27. Foret selon une quelconque des revendications précédentes, dans lequel le foret est un foret à tige droite de longueur Jobber.

28. Foret selon une quelconque des revendications précédentes, dans lequel les filets sont paraboliques.

29. Foret selon une quelconque des revendications précédentes, dans lequel le filet se termine à la tige en une partie de rayon.

30. Procédé de fabrication d'un foret hélicoïdal ayant une pointe, une tige et deux filets définissant une épaisseur prédéterminée d'âme à la pointe, consistant à :
- orienter une meule d'affûtage, ayant un diamètre prédéterminé, suivant un angle prédéterminé par rapport à l'axe d'une pièce d'ébauche de foret, pour la déplacer généralement transversalement afin de la rapprocher et de l'éloigner de ladite ébauche de foret ;
- aligner ladite meule d'affûtage avec la pointe de ladite ébauche de foret afin de retirer une quantité suffisante de matériau pour créer une épaisseur d'âme prédéterminée à ladite pointe lorsque lesdits deux filets ont été formés ; et
- occasionner un déplacement axial relatif entre ladite meule d'affûtage et ladite ébauche de foret, tout en entraînant en rotation ladite ébauche de foret autour de son axe, afin de ménager un filet, ayant une longueur prédéterminée de filet, sur ledit foret, de telle manière que ledit filet ait un angle de conicité d'épaisseur d'âme uniforme, compris dans la gamme d'environ 0,050 cm à environ 0,071 cm par cm (pouces par pouce) de longueur de filet, sur sensiblement toute la longueur dudit filet.

31. Procédé selon la revendication 30, consistant, en outre, à amener ladite meule d'affûtage à se rétracter depuis le contact avec ladite ébauche de foret lorsqu'un point est atteint, qui est à une distance prédéterminée du point auquel le filet se terminerait à la tige si ledit angle de conicité était maintenu.

32. Procédé selon la revendication 31, dans lequel ladite distance prédéterminée est approximativement de 1,27 cm.

33. Procédé selon une quelconque des revendications 30 à 32, dans lequel ledit angle prédéterminé est compris dans la gamme d'environ 20 ° à environ 40 °.

34. Procédé selon la revendication 33, dans lequel ledit angle prédéterminé est d'environ 30°.
